# FASCICULE DE BREVET EUROPEEN

(11) **EP 3 225 100 B1**
(45) Date de publication et mention de la délivrance du brevet: **06.05.2020**
(21) Numéro de dépôt: 17162951.2
(22) Date de dépôt: 27.03.2017
(51) Int. Cl.: A01G 3/037

(54) **OUTIL DE COUPE MOTORISÉ ÉLECTROPORTATIF, DE TYPE SÉCATEUR**
TRAGBARES MOTORISIERTES ELEKTRISCHES SCHNEIDEWERKZEUG VOM TYP GARTENSCHERE
PORTABLE ELECTRIC MOTOR-DRIVEN CUTTING TOOL, SUCH AS SHEARS

(30) Priorité: 31.03.2016 FR 1652787
(43) Date de publication de la demande: 04.10.2017
(73) Titulaire: Innovation Fabrication Commercialisation Infaco, 81140 Cahuzac sur Vere (FR)
(72) Inventeur: GOUT, Christophe, 81600 Gaillac (FR); PRADEILLES, David, 81310 Lisle sur Tarn (FR)
(74) Mandataire: IPAZ

(56) Documents cités:
- EP-A1- 1 842 632
- WO-A2-2011/117335
- CA-A1- 2 734 418
- CN-U- 201 976 487

## Description

### Domaine technique

La présente invention concerne un outil de coupe motorisé électroportatif, en particulier un outil de coupe pour la taille de végétaux, tel qu'un sécateur.

Le domaine de l'invention est le domaine des outils de coupe motorisés électroportatifs, et en particulier le domaine des outils de coupe motorisés électroportatifs pour la taille des végétaux, tels que par exemple des sécateurs.

### État de la technique

Les outils de coupe motorisés électroportatifs pour la taille des végétaux, tels que les sécateurs, comprennent une lame mobile coopérant une autre lame ou une butée, mobile ou non, pour réaliser la coupe d'une branche ou d'une partie d'une plante ou d'un arbre positionné entre ladite lame mobile et ladite autre lame ou butée. La lame mobile est mise en mouvement par un moteur commandé par une gâchette.

Dans ces outils, il est important de connaître la position relative des lames, et en particulier de la lame mobile par rapport à la lame fixe, en vue d'assurer un fonctionnement correct de l'outil.

On connait le document FR 2 957 834 A1 qui décrit un sécateur muni d'un dispositif de contrôle positionnel comprenant deux aimants et deux capteurs à effet Hall pour obtenir des informations de position de la lame mobile.

Un tel dispositif est difficile à maîtriser à cause du croisement de trajectoire des champs des aimants par rapport aux capteurs.

De plus, un tel dispositif est relativement encombrant et présente un coût non négligeable.

On connait aussi le document EP 1 842 632 A1 qui décrit un outil de coupe motorisé électroportatif, en particulier sécateur, destiné notamment à la taille de végétaux, comprenant au moins une lame de coupe mobile, et au moins un moteur pour déplacer ladite lame mobile. L'outil comprenant en outre des moyens de détection de la position de ladite lame mobile comprenant un unique capteur magnétique, dit central, disposé fixe par rapport à ladite lame mobile, et un aimant solidaire de ladite lame mobile.

Un but de la présente invention est de remédier aux inconvénients précités.

Un autre but de la présente invention est de proposer un outil motorisé électroportatif comprenant des moyens de détection de position d'une lame mobile moins coûteux, moins encombrants, plus facile à installer et à utiliser.

### Exposé de l'invention

L'invention permet d'atteindre au moins un de ces objectifs par un outil de coupe motorisé électroportatif, en particulier sécateur, destiné notamment à la taille de végétaux, comprenant :
- au moins une lame de coupe mobile, et
- au moins un moteur pour déplacer ladite lame mobile ;
caractérisé en ce qu'il comprend en outre des moyens de détection de la position de ladite lame mobile comprenant :
- un unique capteur magnétique, dit central, disposé fixe par rapport à ladite lame mobile, et
- au moins deux aimants solidaires de ladite lame mobile.

Ainsi, dans l'outil de coupe selon l'invention, la détection de la position de la lame mobile est réalisée par un seul et unique capteur, contrairement aux outils de l'état de la technique qui nécessitent au moins deux capteurs.

Par conséquent, les moyens de détection de la position de la lame mobile de l'outil selon l'invention sont moins coûteux, moins encombrants et plus facile à installer.

De plus, l'utilisation d'un capteur unique permet de ne pas avoir à gérer le croisement des champs des aimants, qui est un phénomène qui se produit lors de l'utilisation d'au moins deux capteurs. Par conséquent, les moyens de détection de l'outil selon l'invention sont plus faciles à utiliser.

Dans un mode de réalisation non limitatif, l'outil selon l'invention peut comprendre exactement deux aimants fixés à la lame mobile.

Avantageusement, au moins deux aimants peuvent présenter des orientations opposées l'un par rapport à l'autre, vu du capteur central.

Ainsi, il est par exemple possible de discriminer si la lame mobile est en position ouverte ou en position fermée, et/ou le sens de déplacement de la lame mobile, à savoir en ouverture ou en fermeture, en fonction du signal mesuré par le capteur central.

Dans une version préférée de l'outil selon l'invention, au moins un, en particulier chaque, aimant peut être disposé du côté d'une extrémité proximale de la lame mobile.

L'extrémité proximale de la lame mobile est celle qui se trouve du côté du corps de l'outil.

En particulier, la lame mobile peut comprendre une extrémité proximale dentée pour déplacer ladite lame mobile, par exemple au moyen d'une roue dentée mise en rotation par un moteur de l'outil selon l'invention.

Avantageusement, les moyens de détection peuvent comprendre dans ce cas :
- un aimant positionné au niveau d'une première dent, et/ou
- un aimant positionné au niveau d'une dernière dent ;
de ladite extrémité dentée.

Ainsi, il est possible de détecter une position complètement ouverte de la lame mobile, et/ou une position complètement fermée de la lame mobile.

Suivant une version préférée, les moyens de détection peuvent comprendre un aimant positionné au niveau de la première dent, et un aimant positionné au niveau de la dernière dent, et le capteur central peut être positionné de sorte qu'il se trouve à égale distance des aimants positionnés au niveau des première et dernière dents, lorsque la lame mobile se trouve à mi-course entre sa position ouverte et sa position fermée.

En particulier, les deux aimants positionnés au niveau des première et dernière dents peuvent être orientées de manière opposée, par rapport au capteur central. Il est alors plus simple de discriminer la position complètement ouverte de la lame mobile, de la position complètement fermée de la lame mobile.

De plus, le capteur central peut être positionné sous la lame mobile, du côté de l'extrémité proximale de ladite lame mobile.

En particulier, les aimants peuvent être disposés sur une face de la lame mobile en regard du capteur central.

Ainsi, le champ de chaque aimant capté par le capteur central est optimisé et n'est pas perturbé par une pièce se trouvant entre les aimants et le capteur central.

Le capteur central peut préférentiellement être un capteur à effet Hall.

L'outil selon l'invention peut en outre comprendre en outre un module de commande pour commander le moteur, en vue de déplacer la lame mobile.

Le module de commande peut commander le moteur en fonction du signal fourni par le capteur central.

Par exemple, lorsque le capteur central fournit un signal informant que la lame est en ouverture complète, alors le moteur est commandé pour ne plus déplacer la lame en ouverture en vue d'éviter un déraillement de la lame mobile. En outre, lorsque le capteur central fournit un signal informant que la lame est en fermeture complète, alors le moteur est commandé pour ne plus déplacer la lame en fermeture.

De plus la position complètement ouverte, respectivement complètement fermée, peut être utilisée comme position de référence pour :
- commander un déplacement de la lame en fermeture, respectivement en ouverture, ou
- détecter de manière précise la position actuelle de la lame mobile.

Par ailleurs, le signal fournit par le capteur central peut être utilisé pour atteindre une position particulière, par exemple une position de demi-ouverture de la lame mobile.

Le moteur de l'outil selon l'invention peut avantageusement comprendre un capteur, ou codeur, fournissant un signal relatif à la rotation générée par ledit moteur, et donc au déplacement de la lame mobile.

Le module de commande peut alors commander le moteur en outre en fonction dudit signal fourni par ledit capteur, ou codeur.

Ainsi, en combinant le signal fourni par le capteur central et le codeur du moteur il est possible de réaliser un positionnement précis, répétable et de la lame mobile.

En effet, le capteur central permet de déterminer avec précision la position de fermeture complète et/ou la position d'ouverture complète de la lame mobile. A partir d'une, ou de chacune de ces positions, il est alors possible, avec le codeur du moteur, de connaître avec précision la position actuelle de la lame mobile, et de déplacer avec précision la lame mobile.

L'outil selon l'invention, et en particulier le module de commande, peut être configuré pour réaliser une étape d'auto calibration pour mesurer les signaux fournis par chacun des aimants, par exemple lors d'une première utilisation dudit outil.

En particulier, l'étape d'auto calibration peut réaliser une mesure, et éventuellement une mémorisation, d'une valeur maximale d'un signal capté par le capteur central pour chaque aimant.

Lors d'une telle étape de calibration, l'outil peut être commandé pour réaliser une ouverture, et éventuellement une fermeture, complète de la lame mobile.

L'outil selon l'invention peut se présenter sous la forme d'un sécateur portatif comprenant une lame mobile et une contre-lame fixe.

Alternativement, l'outil selon l'invention peut se présenter sous la forme d'un sécateur portatif comprenant deux lames mobiles. Dans ce cas, il est possible d'utiliser les moyens de détection en considérant l'une des lames comme fixe, l'autre des lames mobile par rapport à la lame considérée comme fixe.

### Description des figures et modes de réalisation

D'autres avantages et caractéristiques apparaîtront à l'examen de la description détaillée d'exemples nullement limitatifs, et des dessins annexés sur lesquels :
- la FIGURE 1 est une représentation schématique d'un exemple non limitatif d'un outil de coupe selon l'invention ;
- la FIGURE 2 est une représentation schématique partielle de l'outil de la FIGURE 1, sur laquelle la lame mobile est montrée démontée et retournée ;
- la FIGURE 3 est une représentation schématique du circuit de commande de la lame mobile de l'outil de la FIGURE 1 ; et
- la FIGURE 4 est une représentation schématique d'un exemple de signal mesuré par le capteur central de l'outil de la FIGURE 1.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite, isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

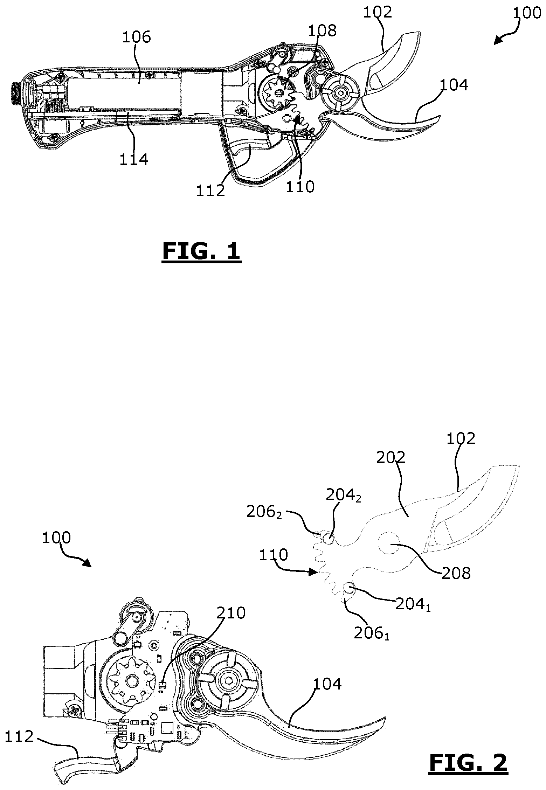

La FIGURE 1 est une représentation schématique d'un exemple non limitatif d'un outil de coupe selon l'invention.

L'outil de coupe, représenté sur la FIGURE 1, est un sécateur 100 comprenant une lame mobile 102 coopérant avec une lame fixe 104 pour réaliser une coupe.

La lame mobile 102 est mise en rotation par un moteur brushless 106, équipé d'un codeur (non visible sur la FIGURE 1), par l'intermédiaire d'une roue dentée 108 qui est engagée dans une extrémité proximale dentée 110 de la lame mobile 102.

Une gâchette 112 permet à un utilisateur de commander le mouvement de la lame mobile 102.

Une carte électronique 114 permet de commander le fonctionnement du moteur 106, et donc la position de lame mobile 102, en fonction de la position de la gâchette 112 mais aussi en fonction de la position actuelle de la lame mobile 102.

La FIGURE 2 est une représentation schématique partielle de l'outil de la FIGURE 1, sur laquelle la lame mobile a été démontée et retournée.

Autrement dit, sur la FIGURE 2, la face visible 202 de la lame mobile 102 est la face qui est en regard de la lame fixe 104, lorsque la lame mobile 102 est montée sur l'outil 100.

Tel que visible sur la FIGURE 2, la lame mobile 102 comprend deux aimants 204₁ et 204₂, fixés à la lame mobile 102, sur la face 202, du côté de l'extrémité proximale dentée 110. En particulier, l'aimant 204₁ est fixée à la lame mobile 102 au niveau d'une première dent 206₁ de l'extrémité dentée 110, et l'aimant 204₂ est fixée à la lame mobile 102 au niveau d'une dernière dent 206₂ de l'extrémité dentée 110.

De manière non limitative, la première dent 206₁ est engagée dans la roue dentée 108 lorsque la lame mobile 102 est en position complètement fermée, et la dernière dent 206₂ est engagée dans la roue dentée 108 lorsque la lame mobile 102 est en position complètement ouverte. La lame mobile 102 est en rotation autour d'un axe 208 entre les positions ouverte et fermée.

Le sécateur 100 comprend en outre un capteur central 210, tel qu'un capteur à effet Hall, disposé sur le châssis de l'outil 100, sous la lame mobile 102, et en regard de la face 202 de la lame mobile 102 comportant les aimants 204₁-204₂. Ce capteur central 210 est prévu pour détecter le champ des aimants 204₁-204₂, lors de la rotation de la lame mobile 102.

Le capteur central 210 est positionné de sorte qu'il se trouve à égale distance des aimants 204₁-204₂, lorsque la lame mobile 102 se trouve à mi-course.

De plus, le capteur central 210 et les aimants 204₁-204₂ sont positionnés de sorte que le capteur central 210 se trouve en dessous et en regard de :
- l'aimant 204₁ lorsque la lame mobile 102 est en position de fermeture complète, et
- l'aimant 204₂ lorsque la lame mobile 102 est en position d'ouverture complète.

En outre, par rapport au capteur central 210, les aimants 204₁-204₂ sont orientés de manière opposée. Par exemple, le pôle nord de l'aimant 204₁ est orienté vers le capteur central 210, alors que c'est le pôle sud de l'aimant 204₂ qui est orienté vers le capteur central 210.

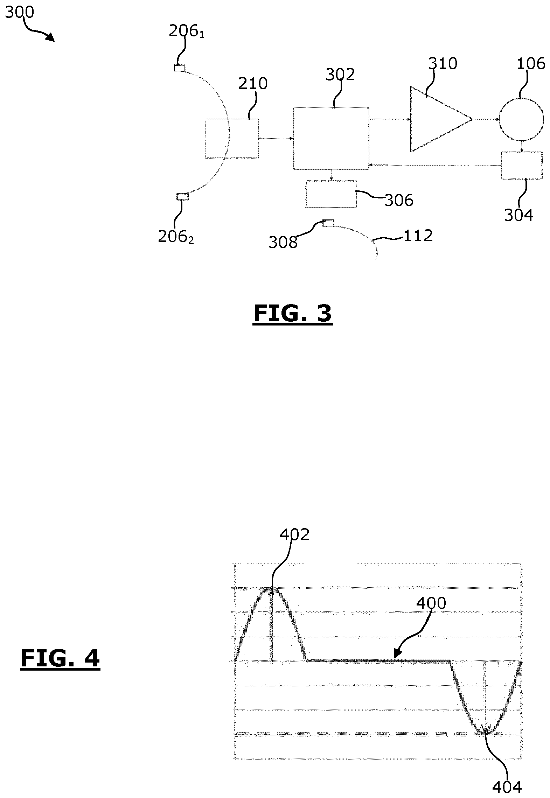

La FIGURE 3 est une représentation schématique d'un exemple non limitatif d'un circuit de commande de la lame mobile de l'outil de la FIGURE 1.

Le circuit de commande 300, représenté sur la FIGURE 3, comprend un module de commande 302 recevant le signal mesuré par le capteur central 210. Ce signal permet de déterminer si la lame mobile 102 se trouve en position de fermeture complète, ou en position d'ouverture complète.

Le module de commande 302 reçoit en outre un signal de la part d'un codeur 304 du moteur brushless 106. Ce signal permet de déterminer exactement la course appliquée par le moteur 106 à la lame mobile 102, à partir d'une position de référence, telle qu'une position d'ouverture complète ou de fermeture complète, par exemple en comptant la quantité de rotation d'un rotor du moteur brushless 106.

Ainsi, en détectant une position d'ouverture complète, et/ou une position de fermeture complète, de la lame mobile 102 grâce au capteur central 210 et aux aimants 206₁-206₂, il est possible à partir du signal fourni par le codeur 304 de déterminer, de manière simple et très précise, la position actuelle de la lame mobile 102.

Le module de commande 302 reçoit également un signal de la part d'un capteur 306, par exemple un capteur à effet Hall, agencé pour détecter la position d'un aimant 308 fixé à la gâchette 112. Le signal reçu du capteur 306 permet de déterminer la position de la gâchette 112, c'est-à-dire la commande souhaitée par l'utilisateur.

En fonction de la position actuelle préalablement déterminée, et de la position de la gâchette 112 renseignée par le capteur 306, la lame mobile 102 peut être commandée de manière précise et sans risque de déraillement.

La FIGURE 4 est une représentation schématique d'un exemple de signal mesuré par le capteur central de l'outil de la FIGURE 1.

Ainsi, pour un des aimants, par exemple l'aimant 204₁, le capteur central 110 mesure un signal 400 de valeur positive et pour l'autre des aimants, par exemple l'aimant 204₂, le capteur central 110 mesure un signal 400 de valeur négative. Cela vient du fait que les aimants 204₁ et 204₂ sont orientés de manière opposée par rapport au capteur central 210. Le signe du signal mesuré 400 permet donc de discriminer facilement si la lame mobile 102 est en position fermée ou en position ouverte.

De plus, on remarque que le signal mesuré 400 présente un maximum positif 402, respectivement un maximum négatif 404. Dans les deux cas, la valeur maximale est obtenue lorsqu'un aimant est positionné en face, en regard, et au plus près du capteur central 210. Par conséquent, lorsque le signal mesuré 400 par le capteur central 210 atteint une valeur maximale positive ou négative, il est possible de détecter avec précision la position de fermeture totale ou d'ouverture totale de la lame mobile 102.

Les valeurs maximales positive 402 et négative 404 peuvent être mesurées et mémorisées dans le module de commande 302, lors d'une phase de calibration du sécateur 100 qui peut être réalisée lors de la première utilisation du sécateur 100 en réalisant une ouverture, et éventuellement une fermeture, complète de la lame mobile 102.

Bien sûr, l'invention n'est pas limitée aux exemples qui viennent d'être décrits et de nombreux aménagements peuvent être apportés à ces exemples sans sortir du cadre de l'invention.

En outre, les exemples qui viennent d'être décrits portent uniquement sur des sécateurs. Bien entendu, l'invention n'est pas limitée aux sécateurs et concernent tout type d'outils motorisés électroportatifs comprenant un élément fonctionnel mobile, en translation et/ou en rotation, tels que par exemple des pinces, des visseuses, des perceuses scie, tronçonneuses, taille-haies, coupe-bordures ou souffleurs.

## Revendications

1. Outil (100) de coupe motorisé électroportatif, en particulier sécateur, destiné notamment à la taille de végétaux, comprenant :
- au moins une lame de coupe mobile (102), et
- au moins un moteur (106) pour déplacer ladite lame mobile (102) ; comprenant en outre des moyens de détection de la position de ladite lame mobile (102) comprenant :
- un unique capteur magnétique (210), dit central, disposé fixe par rapport à ladite lame mobile (102), caractérisé en
- au moins deux aimants (204₁,204₂) solidaires de ladite lame mobile (102).

2. Outil (100) selon la revendication précédente, **caractérisé en ce qu'**il comprend exactement deux aimants (204₁,204₂) fixés à la lame mobile (102).

3. Outil (100) selon l'une quelconque des revendications précédentes, **caractérisé en ce qu'**au moins deux aimants (204₁,204₂) présentent des orientations opposées l'un par rapport à l'autre, vu du capteur central (210).

4. Outil (100) selon l'une quelconque des revendications précédentes, **caractérisé en ce qu'**au moins un, en particulier chaque, aimant (204₁,204₂) est disposé du côté d'une extrémité proximale (110) de la lame mobile (102).

5. Outil (100) selon l'une quelconque des revendications précédentes, **caractérisé en ce que** la lame mobile (102) comporte une extrémité proximale dentée (110) pour déplacer ladite lame mobile (102), les moyens de détection comprenant :
- un aimant (204₁) positionné au niveau d'une première dent (206₁), et/ou
- un aimant (204₂) positionné au niveau d'une dernière dent (206₂) ;
de ladite extrémité dentée (110).

6. Outil (100) selon la revendication précédente, **caractérisé en ce que** la lame mobile (102) comporte un aimant (204₁) au niveau de la première dent (206₁) et un aimant (204₂) au niveau de la dernière dent (206₂) de l'extrémité dentée (110), le capteur central (210) étant positionné de sorte qu'il se trouve à égale distance desdits aimants (204₁,204₂) lorsque la lame mobile (102) se trouve à mi-course.

7. Outil (100) selon l'une quelconque des revendications précédentes, **caractérisé en ce que** le capteur central (210) est positionné sous la lame mobile (102), du côté de l'extrémité proximale (110) de ladite lame mobile (102).

8. Outil (100) selon l'une quelconque des revendications précédentes, **caractérisé en ce que** les aimants (204₁,204₂) sont disposés sur une face (202) de la lame mobile (102) en regard du capteur central (210).

9. Outil (100) selon l'une quelconque des revendications précédentes, **caractérisé en ce qu'**il comprend un module (302) de commande pour commander le moteur (106) en fonction du signal fourni par le capteur central (210).

10. Outil (100) selon la revendication précédente, **caractérisé en ce que** le moteur (106) comprend un capteur (304), ou codeur, fournissant un signal relatif à la rotation générée par ledit moteur (106), la commande dudit moteur (106) par le module de commande (302) étant en outre réalisée en fonction dudit signal fourni par ledit capteur (304).

11. Outil (100) selon l'une quelconque des revendications précédentes, **caractérisé en ce qu'**il est configuré pour réaliser une étape d'auto calibration pour mesurer les signaux fournis par chacun des aimants (204₁,204₂).

12. Outil (100) selon l'une quelconque des revendications précédentes, se présentant sous la forme d'un sécateur portatif comprenant une lame mobile (102) et une contre-lame fixe (104).

## Patentansprüche

1. Tragbares motorisiertes Elektroschneidwerkzeug (100), insbesondere Gartenschere, das vor allem zum Schneiden von Pflanzen bestimmt ist, umfassend:
- wenigstens ein bewegliches Schneidmesser (102) und
- wenigstens einen Motor (106) zum Bewegen des beweglichen Messers (102) ; ferner umfassend Mittel zum Erfassen der Position des beweglichen Messers (102), mit:
- einem einzigen, sogenannten zentralen Magnetsensor (210), der relativ zu dem beweglichen Messer (102) fest angeordnet ist, **gekennzeichnet durch**
- wenigstens zwei Magneten (204₁, 204₂), die mit dem beweglichen Messer (102) fest verbunden sind.

2. Werkzeug (100) nach dem vorhergehenden Anspruch, **dadurch gekennzeichnet, dass** es genau zwei Magnete (204₁, 204₂) umfasst, die an dem beweglichen Messer (102) befestigt sind.

3. Werkzeug (100) nach einem der vorhergehenden Ansprüche, **dadurch gekennzeichnet, dass** wenigstens zwei Magnete (204₁, 204₂) vom zentralen Sensor (210) aus gesehen zueinander entgegengesetzte Ausrichtungen aufweisen.

4. Werkzeug (100) nach einem der vorhergehenden Ansprüche, **dadurch gekennzeichnet, dass** wenigstens ein, insbesondere jeder Magnet (204₁, 204₂) auf der Seite eines proximalen Endes (110) des beweglichen Messers (102) angeordnet ist.

5. Werkzeug (100) nach einem der vorhergehenden Ansprüche, **dadurch gekennzeichnet, dass** das bewegliche Messer (102) ein gezahntes proximales Ende (110) zum Bewegen des beweglichen Messers (102) umfasst, wobei die Erfassungsmittel umfassen:
- einen Magneten (204₁), der im Bereich eines ersten Zahns (206₁), und/oder
- einen Magneten (204₂), der im Bereich eines letzten Zahns (206₂)
des gezahnten Endes (110) positioniert ist.

6. Werkzeug (100) nach dem vorhergehenden Anspruch, **dadurch gekennzeichnet, dass** das bewegliche Messer (102) einen Magneten (204₁) im Bereich des ersten Zahns (206₁) und einen Magneten (204₂) im Bereich des letzten Zahns (206₂) des gezahnten Endes (110) umfasst, wobei der zentrale Sensor (210) so positioniert ist, dass er von den Magneten (204₁, 204₂) gleich weit beabstandet ist, wenn sich das bewegliche Messer (102) auf halbem Weg befindet.

7. Werkzeug (100) nach einem der vorhergehenden Ansprüche, **dadurch gekennzeichnet, dass** der zentrale Sensor (210) auf der Seite des proximalen Endes (110) des beweglichen Messers (110) unter dem beweglichen Messer (102) positioniert ist.

8. Werkzeug (100) nach einem der vorhergehenden Ansprüche, **dadurch gekennzeichnet, dass** die Magnete (204₁, 204₂) auf einer dem zentralen Sensor (210) gegenüberliegenden Seite (202) des beweglichen Messers (102) angeordnet sind.

9. Werkzeug (100) nach einem der vorhergehenden Ansprüche, **dadurch gekennzeichnet, dass** es ein Steuermodul (302) umfasst, um den Motor (106) in Abhängigkeit von dem durch den zentralen Sensor (210) gelieferten Signal zu steuern.

10. Werkzeug (100) nach dem vorhergehenden Anspruch, **dadurch gekennzeichnet, dass** der Motor (106) einen Sensor (304) oder Codierer umfasst, der ein Signal bezüglich der durch den Motor (106) erzeugten Drehung liefert, wobei die Steuerung des Motors (106) durch das Steuermodul (302) ferner in Abhängigkeit von dem durch den Sensor (304) gelieferten Signal erfolgt.

11. Werkzeug (100) nach einem der vorhergehenden Ansprüche, **dadurch gekennzeichnet, dass** es dazu ausgelegt ist, einen Schritt zur Selbstkalibrierung durchzuführen, um die durch einen jeden der Magneten (204₁, 204₂) gelieferten Signale zu messen.

12. Werkzeug (100) nach einem der vorhergehenden Ansprüche, das in Form einer tragbaren Gartenschere vorliegt, die ein bewegliches Messer (102) und ein festes Gegenmesser (104) aufweist.

## Claims

1. Portable electric motor-driven cutting tool (100), in particular shears, intended, in particular, for pruning plants, comprising:
- at least one movable cutting blade (102), and
- at least one motor (106) to move said movable blade (102);
further comprising means for detecting the position of said blade (102) comprising:
- a single, so-called central, magnetic sensor (210), arranged fixedly with respect to said movable blade (102), **characterised by**
- at least two magnets (204₁, 204₂) integral with said movable blade (102).

2. Tool (100) according to the preceding claim, **characterised in that** it comprises exactly two magnets (204₁, 204₂) fixed to the movable blade (102).

3. Tool (100) according to one of the preceding claims, **characterised in that** at least two magnets (204₁, 204₂) have opposite orientations in relation to each other, as seen from the central sensor (210).

4. Tool (100) according to one of the preceding claims, **characterised in that** at least one, in particular each magnet (204₁, 204₂), is arranged on the side of a proximal end (110) of the movable blade (102).

5. Tool (100) according to one of the preceding claims, **characterised in that** the movable blade (102) comprises a toothed proximal end (110) for moving said movable blade (102), wherein the detection means comprise:
- a magnet (204₁) located at the level of a first tooth (206₁), and/or
- a magnet (204₂) located at the level of a final tooth (206₂);
of said toothed end (110).

6. Tool (100) according to the preceding claim, **characterised in that** the movable blade (102) comprises a magnet (204₁) at the level of the first tooth (206₁) and a magnet (204₂) located at the level of the final tooth (206₂) of the toothed end (110), wherein the central sensor (210) is positioned such that it is found at an equal distance from said magnets (204₁, 204₂) when the movable blade (102) is halfway through its travel.

7. Tool (100) according to one of the preceding claims, **characterised in that** the central sensor (210) is located under the movable blade (102) on the side of the proximal end (110) of said movable blade (102).

8. Tool (100) according to one of the preceding claims, **characterised in that** the magnets (204₁, 204₂) are located on one side (202) of the movable blade (102) facing the central sensor (210).

9. Tool (100) according to one of the preceding claims, **characterised in that** it comprises a control module (302) for controlling the motor (106) according to the signal supplied by the central sensor (210).

10. Tool (100) according to the preceding claim, **characterised in that** the motor (106) comprises a sensor (304), or encoder, that supplies a signal relating to the rotation generated by said motor (106), wherein said motor (106) is further controlled by the control module (302) as a function of said signal supplied by said sensor (304).

11. Tool (100) according to one of the preceding claims, **characterised in that** it is configured to perform an auto-calibration step to measure the signals supplied by each of the magnets (204₁, 204₂).

12. Tool (100) according to one of the preceding claims, in the form of portable shears comprising a movable blade (102) and a fixed counter-blade (104).
